# EUROPEAN PATENT SPECIFICATION

(11) **EP 4 182 911 B1**
(45) Date of publication and mention of the grant of the patent: **30.04.2025**
(21) Application number: 21748956.6
(22) Date of filing: 15.07.2021
(51) Int. Cl.: G09F 21/04, G09F 21/10, G09F 21/20, G09F 13/08, B60N 2/58, B60N 2/70, G09F 23/00, G09F 13/04

(54) **SEAT COMPRISING AN APPARATUS FOR REALIZING A LUMINOUS SYMBOL**
SITZ MIT EINER VORRICHTUNG ZUR REALISIERUNG EINES LEUCHTENDER SYMBOLE
SIÈGE COMPRENANT UN APPAREIL POUR RÉALISER DES SYMBOLES LUMINEUX

(30) Priority: 16.07.2020 IT 202000017308
(43) Date of publication of application: 24.05.2023
(73) Proprietor: SDV S.R.L., 36045 Lonigo (VI) (IT); Sergen S.r.l. Unipersonale, 25135 Brescia (IT); Atomo S.r.l. Unipersonale, 25080 Manerba del Garda (BS) (IT)
(72) Inventor: ZANETTI, Ciro, 25127 Brescia (IT); COPETA, Andrea, 25080 Manerba del Garda (Brescia) (IT); DALLA VALLE, Gian Luca, 36040 Sarego (Vicenza) (IT)
(74) Representative: Anselmi, Davide
(86) International application number: PCT/IB2021/056386
(87) International publication number: WO 2022/013802

(56) References cited:
- EP-A1- 3 372 437
- DE-A1- 102019 002 483
- JP-B2- 5 308 020
- US-A1- 2006 113 827

## Description

### FIELD OF APPLICATION

The present invention relates to a seat comprising an apparatus for realizing a luminous symbol, mainly although not exclusively of vehicles.

More specifically, the apparatus according to the invention provides for the use of components substantially comprising a light source placed at the base of a diffuser made of soft and transparent material which is inserted in a padding of saddles, seats, armchairs or sofas or the like so that a luminous symbol may appear on the external surface of the product, producing an important and attractive aesthetic effect during the activation thereof.

The present invention is advantageously applied in the sector of vehicle accessories, in particular in the field of paddings for saddles or seats for vehicles in general, but also for any other use including the sector of furnishing components such as armchairs or sofas and relative paddings.

### PRIOR ART

It is known that in some sectors, such as in the automotive sector or in that of motorcycles or even in that of bicycles, components are realized which can be customized with the application of symbols, labels, or, on particular surfaces, of inserts.

More specifically, it is known that, in addition to the application of symbols or labels on the rigid components, such as on bodywork or hulls, some vehicle paddings, such as seats or saddles can also be customized, on which in some cases symbols or small decorations or images are applied or printed or inserted that can refer to the brand of the manufacturer or even to particular customizations representing a recall and that can enrich the aesthetic effect of the vehicle.

In other cases, the symbols can be obtained by means of embroidery made on the surface of the padding coating or by inserting inlays or other similar decorative techniques consisting in composing figures or designs with the same or different materials which are fixed on the surface of the underlying coating, obtaining compositions with aesthetic effect or a recall of the manufacturer or other customizations.

It is also known that in some cases luminous devices are used and applied on the edges of motor vehicle seats, in order to highlight the profile thereof, or as a reference for seatings, while in the sector of bicycles or the like in some cases it is provided that in the saddles luminous elements are introduced that act as a reference for rear visibility for the vehicles arriving during circulation in the evening or at night.

In this case, the luminous devices that protrude outward from a body partially inserted in the bicycle saddles, are aimed at emergency lighting.

Other traced solutions involve the use of luminous or luminescent elements that protrude from the seats of road vehicles, but also from seats or armchairs of aircraft or the like or that can be used in public environments such as cinemas, theatres or the like, in order to identify the location thereof also in the darkness.

These solutions involve the use of luminous or luminescent elements that fit by interlocking into the paddings but remaining distinct therefrom, so that the luminous elements protrude outside.

Some examples of prior art are known from documents EP 3 372 437 A1, DE 10 2019 002483 A1, US 2006/113827 A1. JP 5 308020 B2 is the closest prior art.

### DESCRIPTION OF THE INVENTION

The present invention proposes to make available an apparatus provided with at least one luminous element made in such a way as to allow viewing a luminous symbol through the soft surface of the padding coating of the seat or of a saddle or the like of a vehicle or the like, thus creating a condition capable of overcoming the limits highlighted above relating to known solutions.

In particular, the invention aims to provide a construction method for realizing saddles, seats or the like which provides for the possibility of viewing a luminous symbol with well-defined contours, which shines through the surface of the coating.

Another object of the invention is that of realizing a luminous symbol provided with a diffuser support, made in soft and transparent material, which remains completely embedded in the seat padding, maintaining the perfect homogeneous consistency of the surface.

This is achieved by means of a seat comprising an apparatus adapted to realize luminous symbols thereon, the characteristics of which are described in the independent claim 1, and a process according to claim 15.

The dependent claims of the present solution outline advantageous embodiments of the invention.

The main advantages of this solution concern the possibility of realizing saddles or seats provided with a particular perfectly integrated luminous symbol, therefore imperceptible under normal daylight conditions when it can be kept turned off, and perfectly viewable under conditions of darkness or limited ambient light when activated, producing a particular and surprising aesthetic effect of sure impact for the viewer.

A further advantage offered by the luminous symbol according to the invention is that it can be inserted both during the new step of realization of the seat or saddle or the like, or be inserted as a modification in existing saddles, possibly making the necessary changes to the materials of which the padding or the coating is made.

It is also envisaged that the symbol is made by preparing a luminous area whose outermost part located below the coating can be suitably treated with contours defined by suitable inks, or with pre-shaped blackout templates or the like, in order to obtain the design of the symbol without excessively affecting the costs of realization.

According to a particularly advantageous embodiment of the invention, it is also provided that the light source is represented by one or more LEDs of the polychromatic type which can create even more surprising light effects on the symbol to be viewed.

### ILLUSTRATION OF THE DRAWINGS

Further features and advantages of the invention will become apparent from reading the following description of an embodiment of the invention provided by way of non-limiting example, with the aid of the drawings illustrated in the appended tables of drawings, in which:
- Figures 1 and 2 show schematic plan and perspective views respectively of the main electrical components which allow the activation of the light source;
- Figure 3 represents a plan view of all the electrical and structural components that make up the light source, including the coupling means inside a padding;
- Figures 4 and 5 illustrate schematic plan and perspective view respectively of the electrical and structural components that make up the light source, inserted in the base of a soft and transparent light support;
- Figures 6 and 7 show schematic plan and bottom views respectively of a saddle or seat including the electrical and structural components that make up the light source inserted in the soft and transparent light support;
- Figure 8 illustrates a schematic sectional view thereof on the median vertical plane defined by the line AA of Figure 7;
- Figures 9 and 10 show enlarged details of the previous figure 8, with the components respectively in exploded and assembled view.

### DESCRIPTION OF AN EMBODIMENT OF THE INVENTION

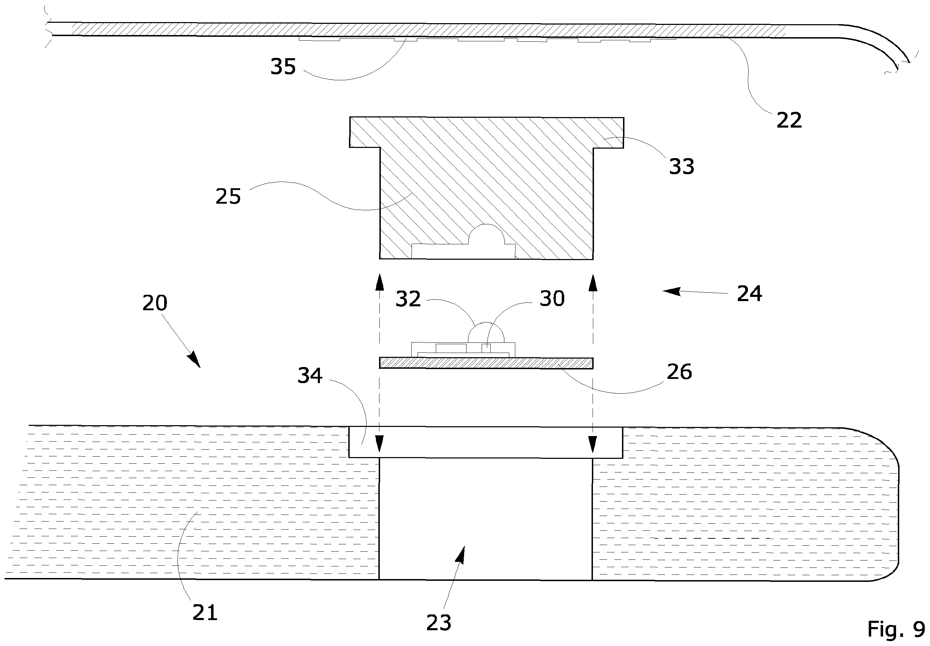

With reference to the attached figures, and initially in particular to figures 9 and 10, 20 generally denotes a saddle, seat, armchair, sofa or the like, comprising a padding 21 and at least one coating layer 22.

In particular, the padding 21 is generally made of polyurethane foam by moulding in a foaming machine, which solidifies once injected into a thermoregulated mould.

According to a preferred embodiment of the invention, it is envisaged that, as shown in Figure 9, for the production of the polyurethane foam of the padding 21 a mould is used in which a seat 23 is formed into which a containment body 25 of a light source 30, and of the activation and diffusion means thereof indicated as a whole with 24 are inserted in use.

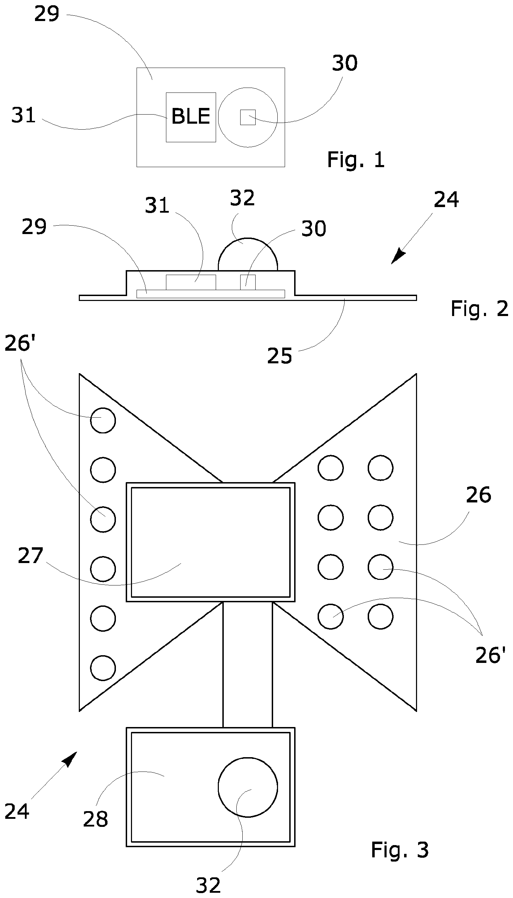

With reference to the embodiment of the invention illustrated in Figures 1, 2, 3 and 9, the light source assembly 24 comprises a support 26 associated with a base 27 adapted to contain electrical components for the activation of said light source 30, which remain closed inside a lid 28, shown in Figure 3, made of transparent material.

The support 26 is provided with a plurality of holes 26' which allow the support itself to remain embedded in the base of said containment body 25.

An electrical circuit 29 in turn comprising said light source 30, which is of the LED type or the like, is applied on said base 27 of the support 26.

It is also provided that the electrical circuit 29 is equipped with a module 31 for transceiving pulses and remote controls wirelessly.

According to a preferred embodiment, this module can be of the BT or BLE type, i.e. Bluetooth or Bluetooth Low Energy, or other type of wireless module according to the needs.

The lid 28 has the function of closing on the base 27 and of keeping the electrical components placed in its inside sealed.

The lid 28, made of transparent material, is provided with a semi-spherical lens 32, also transparent, whose centre is placed on the same axis perpendicular to the base 29 passing through the centre of the light-emitting element 30, in order to allow the propagation of light around 180°.

The electrical components described above are connected by cable to an independent power supply source or to a power socket connected to the vehicle circuit to which they are associated.

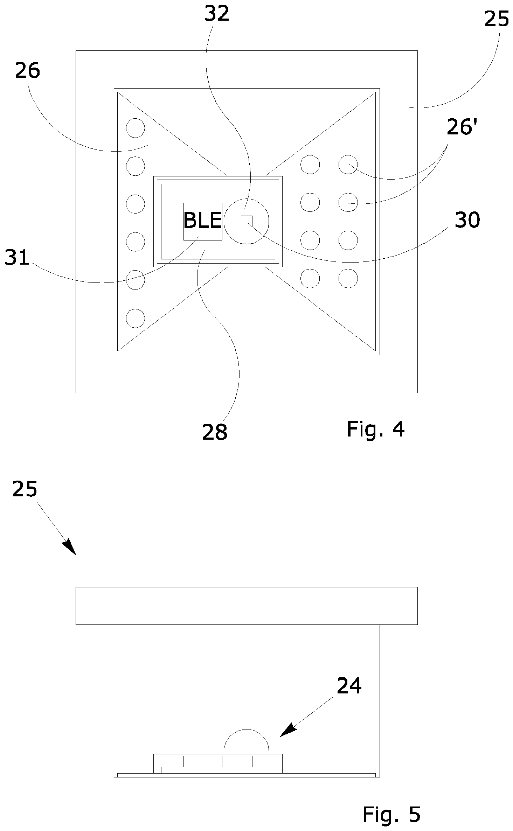

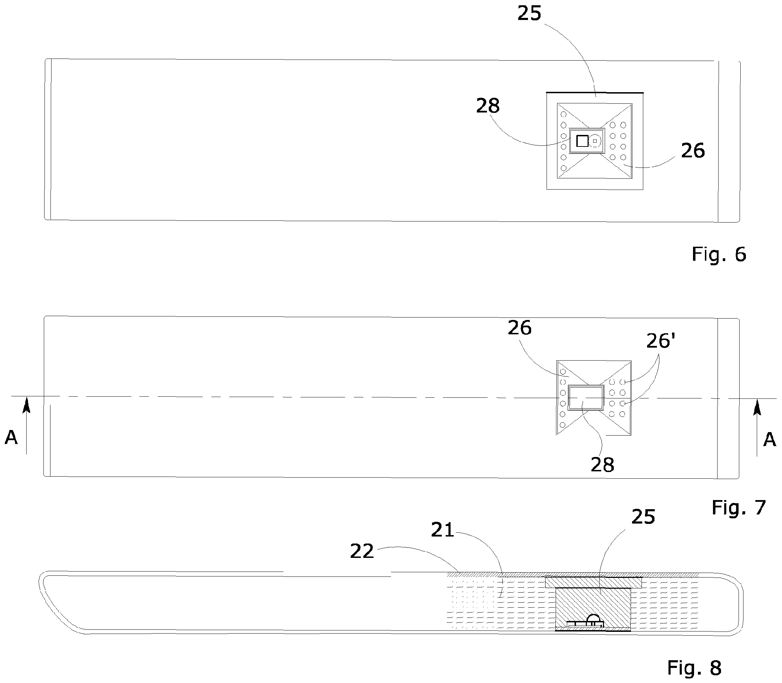

According to the embodiment shown in Figures 4 to 10, the containment body 25 has an extension orthogonal to the covering layer 35 which runs from the source 30 up to the coating layer 22 to guide the light emitted by the source 30 up to said covering layer 35. In practice it is a single body that defines a single (silicone) layer of light guide and not a plurality of layers.

The aforesaid containment body 25, which is made by moulding soft and transparent material, has a prismatic or cylindrical conformation or other three-dimensional shape that is more suitable according to the requirements, the base of which can be associated with the support 26 of the light source group 30 with the above-described activation and diffusion means thereof indicated as a whole with 24.

According to the embodiment shown in Figures 5 and 9, the containment body 25 has an enlarged area 33 opposite to the support 26 so as to define a "mushroom" shape.

The seat 23 of the padding 21 also has a respective enlargement 34 having dimensions corresponding to those of the aforesaid enlarged area 33, so that the containment body 25 together with the light group 24 can be inserted into the seat 23 collimating perfectly as if to become a single body.

In other words, the enlarged area 33 of the containment body 25, by matching with the widening 34 of the seat 23, allows the two assembled components to form a single body practically of the same consistency and with the surface area placed at the same level, without solution of continuity.

More specifically, from the constructive point of view, the containment body 25 is made by pouring transparent silicone gel into a mould where the light source group 24 has been previously positioned, so that the support 26 provided with the holes 26', together with the components of the light source group 24, remains embedded in the base of the containment body 25, so as to form a single body, in such a manner that the light emitted by the source 30 can be perfectly diffused in the containment body 25.

It should be noted that the transparency gradient of the containment body 25 can be any, even if it is preferable to use a material that is not completely transparent but opal, so that the light on the surface is perfectly homogeneous.

The coating layer 22 is designed to coat the padding 21 in which the containment body 25 is inserted and, in order to allow the light diffused through the containment body 25 to be viewed from the outside, it is made of a special material that is permeable to light.

According to the invention, the coating layer 22 is made of fabric or other suitable material which allows the passage of the light rays emitted by the source 30 diffused through the lens 32 and through the containment body 25.

Additionally, the coating layer 22 is entirely made of fabric or other suitable material which allows the passage of light rays (preferably spreadable PVC).

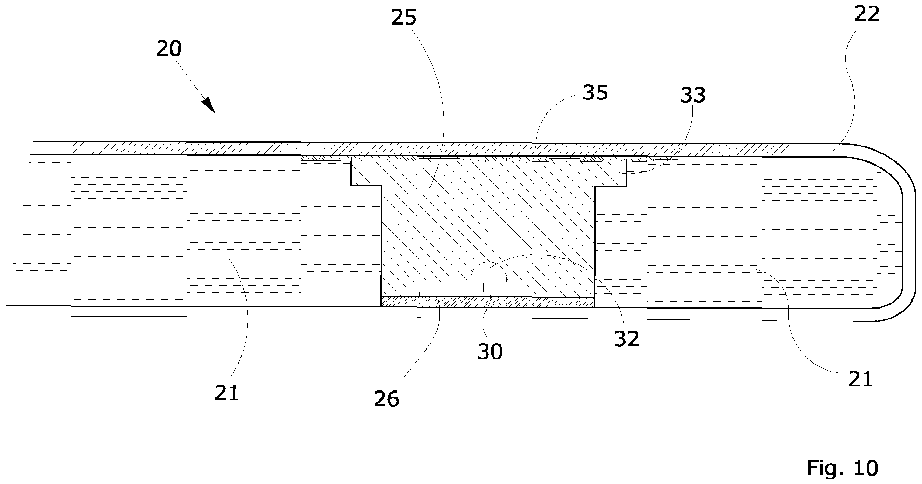

According to a preferred embodiment of the invention, represented in Figures 9 and 10, the inner side of the coating 22 is treated with an ink layer 35 opaque to light rays, preferably only at the containment body 25 from which the light comes where the symbol to be viewed is defined.

Said ink layer can be obtained from a design formed by transparent areas alternating with opaque areas, according to a conformation that represents the symbol to be viewed through the coating 22.

In this way, from the outside on the coating 22 no surface differences or micro-perforations visible to the human eye appear (even with the light source 30 turned off) since:
- the coating layer 22 is entirely made of fabric or other suitable material which allows the passage of light rays (not only at the containment body 25 from which the light comes);
- the ink is deposited on the inner layer of the coating 22 at the symbol to be drawn.

Alternatively, the ink layer 35 can also be realized by producing labels obtained by printing or by laser cutting opaque layers which are shaped with a design corresponding to the desired symbol to be viewed.

In other words, the coating layer 22 is associated with the emitting side of the transparent body 25 and said layer 35 of material applied on the inner side of the coating 22 facing the padding, has some opaque areas to block the light at some areas and let it pass at others.

The assembly of the components described above, as shown in figure 9, involves the following steps:
a) realizing a padding 21 of the saddle in which a seat 23 is obtained;
b) realizing a containment body 25 of transparent and soft material in which the light source 24 is included;
c) positioning the containment body 25 in the seat 23;
d) realizing a covering layer 35 (preferably in printed ink format) which is opaque to light rays to an inner surface of said coating (22), at an area thereof adjacent to said containment body (25), so as to define a design of said luminous symbol with an alternation of areas that are transparent to the luminous rays with respect to said opaque areas;
e) coating the saddle with the coating layer 22 entirely transparent to the light rays and preferably made with spreadable PVC.
According to one embodiment of the invention, in order to realize the containment body 25 a mould comprising a counter-shape having a conformation of the light-emitting group 24 which is inserted together with the support (26) with circuitry 27 and LED 30 is used, the silicone mould is filled and the solidification thereof is awaited.

The activation of the light source can be carried out in different ways starting by pressing on a special switch connected to the electrical circuit, or by synchronizing the electrical components to the vehicle control unit or by wireless remote control in the case of interaction with the BT or BLE component or other wireless module 31.

## Claims

1. A seat comprising an apparatus for realizing a luminous symbol comprising:
a padding (21) in soft material and a coating layer (22) adapted to be applied above said padding (21), a light source and a containment body (25) of said light source (30), in use, positioned inside a seat (23) obtained in said padding (21); said containment body (25) being made of transparent and soft material so as to let the light rays emitted by said light source (30) pass outside said containment body towards said coating layer (22); said containment body (25) being made as a solid body and defining a single layer;
said padding defining said seat (23) which is counter-shaped with respect to said containment body (25) in which the latter is inserted;
**characterized in that** said coating (22) has an inner surface thereof on which a covering layer (35) which is opaque to light rays is applied wherein, at an area thereof adjacent to said containment body (25), it defines a design of said luminous symbol with an alternation of areas that are transparent to the luminous rays with respect to said opaque areas;
said coating layer (22) is entirely made of a material which allows the passage of the light rays emitted by the source (30) through the containment body (25); wherein the coating layer (22) is entirely made of fabric or other suitable material which allows the passage of light rays and not only at the containment body (25) from which the light comes.

2. The seat according to claim 1, **characterized in that** said covering layer (35) is a layer made of ink.

3. The seat according to any one of the preceding claims, **characterized in that** said covering layer (35) is applied to the inner surface of the coating layer (22) only at an area thereof adjacent to said containment body (25), with the exception of said areas that are transparent to the luminous rays in order to define the design of said luminous symbol.

4. The seat according to any one of the preceding claims, **characterized in that** said containment body (25) is made of soft and light-transparent silicone to define light guide.

5. The seat according to any one of the preceding claims, **characterized in that** the coating layer (22) is entirely made of spreadable PVC.

6. The seat according to any one of the preceding claims, **characterized in that** said containment body (25) has an extension orthogonal to the covering layer (35) and extends from the source (30) up to the coating layer (22) to guide the light emitted by the source (30) up to said covering layer (35).

7. The seat according to any one of the preceding claims, **characterized in that** said containment body (25) is mushroom-shaped and has an enlarged area (33) arranged on the opposite side with respect to the light source (30) according to a direction orthogonal to the covering layer (35).

8. The seat according to any one of the preceding claims, **characterized in that** it comprises a support (26) inserted inside said containment body, on which support (26) an electrical circuit (29) in turn comprising said light source (30) is applied.

9. The seat according to claim 8, **characterized in that** said light-emitting element is of the polychromatic LED type.

10. The seat according to claims 8 or 9, **characterized in that** said support (26) is provided with a plurality of holes (26') in which the transparent and soft material defining said containment body (25) is inserted.

11. The seat according to any one of claims 8 to 10, **characterized in that** said electrical circuit (29) is equipped with a wireless module (31) for transceiving pulses and wireless controls which is configured for the remote management of said light source (30).

12. The seat according to claim 11, **characterized in that** said electrical circuit (29) is closed by a lid (28) made of transparent material.

13. The seat according to claim 12, **characterized in that** said lid (28) is provided with a semi-spherical lens (32), also transparent, whose centre is placed on an axis perpendicular to the base (29) and passing through the centre of the light-emitting element (30) for the propagation of light through said body (25).

14. The seat for realizing a luminous symbol according to the preceding claims, **characterized in that** said containment body (25) is made of soft and transparent material and has a prismatic or cylindrical shape or other three-dimensional shape having a base side on which said light source (30) is mounted.

15. A process for realizing a luminous symbol inside a seat of a vehicle, according to claim 1, **characterized in that** it comprises the following steps:
a) realizing a padding (21) a in which a seat (23) is obtained;
b) Realizing a containment body (25) of transparent and soft material in which the light source is included; said containment body (25) being realized as a solid body and defining a single layer;
c) Positioning the containment body (25) in the seat (23);
d) Coating the padding with a coating layer (22) entirely made of a material which allows the passage of the light rays emitted by the source (30) through the containment body (25); said coating phase being realized in such a way that the coating layer (22) is entirely made of fabric or other suitable material which allows the passage of light rays and not only at the containment body (25) from which the light comes;
e) Applying a covering layer (35) which is opaque to the light rays to an inner surface of said coating (22), at an area thereof adjacent to said containment body (25), so as to define a design of said luminous symbol with an alternation of areas that are transparent to the luminous rays with respect to said opaque areas.

## Patentansprüche

1. Sitz mit einer Vorrichtung zur Realisierung eines leuchtenden Symbols, umfassend:
eine Polsterung (21) aus weichem Material und eine Beschichtungsschicht (22), die dazu ausgelegt ist, über der Polsterung (21) aufgebracht zu werden,
eine Lichtquelle und
einen Aufnahmekörper (25) der Lichtquelle (30), der im Gebrauch innerhalb eines Sitzes (23) positioniert ist, der in der Polsterung (21) erhalten wird; wobei der Aufnahmekörper (25) aus durchlässigem und weichem Material hergestellt ist, um die von der Lichtquelle (30) emittierten Lichtstrahlen außerhalb des Aufnahmekörpers in Richtung der Beschichtungsschicht (22) passieren zu lassen; wobei der Aufnahmekörper (25) als ein fester Körper hergestellt ist und eine einzige Schicht definiert;
wobei die Polsterung den Sitz (23) definiert, der passend zum Aufnahmekörper (25), in den dieser eingesetzt ist, gegenständig ausgeformt ist;
**dadurch gekennzeichnet, dass** die Beschichtung (22) eine innere Oberfläche davon aufweist, auf der eine Abdeckschicht (35) aufgebracht ist, die für Lichtstrahlen undurchlässig ist, wobei sie an einem Bereich davon, der an den Aufnahmekörper (25) angrenzt, eine Gestaltung des leuchtenden Symbols mit einer Abwechslung von Bereichen definiert, die für die Lichtstrahlen in Bezug auf die undurchlässigen Bereiche durchlässig sind;
wobei die Beschichtungsschicht (22) vollständig aus einem Material hergestellt ist, das den Durchtritt der von der Quelle (30) emittierten Lichtstrahlen durch den Aufnahmekörper (25) ermöglicht; wobei die Beschichtungsschicht (22) vollständig aus einem Gewebe oder einem anderen geeigneten Material hergestellt ist, das den Durchtritt von Lichtstrahlen ermöglicht und nicht nur an dem Aufnahmekörper (25), von dem das Licht kommt.

2. Sitz nach Anspruch 1, **dadurch gekennzeichnet, dass** die Abdeckschicht (35) eine Schicht ist, die aus Tinte besteht.

3. Sitz nach einem der vorhergehenden Ansprüche, **dadurch gekennzeichnet, dass** die Abdeckschicht (35) auf die innere Oberfläche der Beschichtungsschicht (22) nur an einem Bereich davon aufgebracht ist, die an den Aufnahmekörper (25) angrenzt, mit Ausnahme der für die Lichtstrahlen durchlässigen Bereiche, um die Gestaltung des leuchtenden Symbols zu definieren.

4. Sitz nach einem der vorhergehenden Ansprüche, **dadurch gekennzeichnet, dass** der Aufnahmekörper (25) aus weichem und lichtdurchlässigem Silikon hergestellt ist, um einen Lichtleiter zu definieren.

5. Sitz nach einem der vorhergehenden Ansprüche, **dadurch gekennzeichnet, dass** die Beschichtungsschicht (22) vollständig aus streichfähigem PVC hergestellt ist.

6. Sitz nach einem der vorhergehenden Ansprüche, **dadurch gekennzeichnet, dass** der Aufnahmekörper (25) eine zur Abdeckschicht (35) orthogonale Erstreckung aufweist und sich von der Quelle (30) bis zur Beschichtungsschicht (22) erstreckt, um das von der Quelle (30) emittierte Licht bis zur Abdeckschicht (35) zu leiten.

7. Sitz nach einem der vorhergehenden Ansprüche, **dadurch gekennzeichnet, dass** der Aufnahmekörper (25) pilzförmig ist und einen vergrößerten Bereich (33) aufweist, der auf der gegenüberliegenden Seite in Bezug auf die Lichtquelle (30) gemäß einer Richtung orthogonal zu der Abdeckschicht (35) angeordnet ist.

8. Sitz nach einem der vorhergehenden Ansprüche, **dadurch gekennzeichnet, dass** er einen in den Aufnahmekörper eingesetzten Träger (26) umfasst, auf welchem Träger (26) eine elektrische Schaltung (29) aufgebracht ist, die wiederum die Lichtquelle (30) umfasst.

9. Sitz nach Anspruch 8, **dadurch gekennzeichnet, dass** das lichtemittierende Element vom polychromatischen LED-Typ ist.

10. Sitz nach Anspruch 8 oder 9, **dadurch gekennzeichnet, dass** der Träger (26) mit einer Vielzahl von Löchern (26') versehen ist, in die das durchlässige und weiche Material, das den Aufnahmekörper (25) definiert, eingesetzt ist.

11. Sitz nach einem der Ansprüche 8 bis 10, **dadurch gekennzeichnet, dass** die elektrische Schaltung (29) mit einem drahtlosen Modul (31) zum Senden/Empfangen von Impulsen und drahtlosen Steuerungen ausgestattet ist, das für die Fernverwaltung der Lichtquelle (30) konfiguriert ist.

12. Sitz nach Anspruch 11, **dadurch gekennzeichnet, dass** die elektrische Schaltung (29) durch einen Deckel (28) aus durchlässigem Material geschlossen ist.

13. Sitz nach Anspruch 12, **dadurch gekennzeichnet, dass** der Deckel (28) mit einer halbkugelförmigen, ebenfalls durchlässigen Linse (32) versehen ist, deren Mitte auf einer Achse senkrecht zur Basis (29) angeordnet ist und durch die Mitte des lichtemittierenden Elements (30) für die Ausbreitung von Licht durch den Körper (25) verläuft.

14. Sitz zur Realisierung eines leuchtenden Symbols nach den vorhergehenden Ansprüchen, **dadurch gekennzeichnet, dass** der Aufnahmekörper (25) aus weichem und durchlässigem Material hergestellt ist und eine prismatische oder zylindrische Form oder eine andere dreidimensionale Form mit einer Basisseite aufweist, auf der die Lichtquelle (30) montiert ist.

15. Verfahren zur Realisierung eines leuchtenden Symbols innerhalb eines Sitzes eines Fahrzeugs nach Anspruch 1, **dadurch gekennzeichnet, dass** es die folgenden Schritte umfasst:
a) Realisieren einer Polsterung (21), in der ein Sitz (23) erhalten wird;
b) Realisieren eines Aufnahmekörpers (25) aus durchlässigem und weichem Material, in dem die Lichtquelle enthalten ist; wobei der Aufnahmekörper (25) als ein fester Körper realisiert ist und eine einzige Schicht definiert;
c) Positionieren des Aufnahmekörpers (25) in den Sitz (23) ;
d) Beschichten der Polsterung mit einer Beschichtungsschicht (22), die vollständig aus einem Material hergestellt ist, das den Durchtritt der von der Quelle (30) emittierten Lichtstrahlen durch den Aufnahmekörper (25) ermöglicht; wobei die Beschichtungsphase so ausgeführt ist, dass die Beschichtungsschicht (22) vollständig aus einem Gewebe oder einem anderen geeigneten Material hergestellt ist, das den Durchtritt von Lichtstrahlen ermöglicht und nicht nur an dem Aufnahmekörper (25), von dem das Licht kommt;
e) Aufbringen einer Abdeckschicht (35), die für die Lichtstrahlen undurchlässig ist, auf eine innere Oberfläche der Beschichtung (22) an einem Bereich davon, der an den Aufnahmekörper (25) angrenzt, um eine Gestaltung des leuchtenden Symbols mit einer Abwechslung von Bereichen zu definieren, die für die Lichtstrahlen in Bezug auf die undurchlässigen Bereiche durchlässig sind.

## Revendications

1. Siège comprenant un appareil pour réaliser un symbole lumineux, comprenant :
un rembourrage (21) en matériau souple et une couche de revêtement (22) adaptée pour être appliquée au-dessus dudit rembourrage (21),
une source lumineuse et
un corps de contenance (25) de ladite source lumineuse (30), lors de l'utilisation, positionné à l'intérieur d'un siège (23) obtenu dans ledit rembourrage (21) ; ledit corps de contenance (25) étant constitué d'un matériau transparent et souple de manière à laisser les rayons lumineux émis par ladite source lumineuse (30) passer à l'extérieur dudit corps de contenance vers ladite couche de revêtement (22) ; ledit corps de contenance (25) étant constitué d'un corps solide et définissant une seule couche ;
ledit rembourrage définissant ledit siège (23) étant de forme opposée par rapport audit corps de contenance (25) dans lequel ce dernier est inséré ;
**caractérisé en ce que** ledit revêtement (22) comporte une surface intérieure sur laquelle est appliquée une couche de recouvrement (35) étant opaque aux rayons lumineux dans lequel, en correspondance d'une zone adjacente audit corps de contenance (25), il définit un dessin dudit symbole lumineux avec une alternance de zones étant transparentes aux rayons lumineux par rapport auxdites zones opaques ;
ladite couche de revêtement (22) est entièrement constituée d'un matériau qui permet le passage des rayons lumineux émis par la source (30) à travers le corps de contenance (25) ; dans lequel la couche de revêtement (22) est entièrement constituée de tissu ou d'un autre matériau approprié qui permet le passage des rayons lumineux et pas seulement en correspondance du corps de contenance (25) d'où provient la lumière.

2. Siège selon la revendication 1, **caractérisé en ce que** ladite couche de recouvrement (35) est une couche d'encre.

3. Siège selon l'une quelconque des revendications précédentes, **caractérisé en ce que** ladite couche de recouvrement (35) n'est appliquée sur la surface intérieure de la couche de revêtement (22) que dans une zone de celle-ci adjacente audit corps de contenance (25), à l'exception desdites zones qui sont transparentes aux rayons lumineux afin de définir le dessin dudit symbole lumineux.

4. Siège selon l'une quelconque des revendications précédentes, **caractérisé en ce que** ledit corps de contenance (25) est réalisé en silicone souple et transparent à la lumière pour définir un guide de lumière.

5. Siège selon l'une quelconque des revendications précédentes, **caractérisé en ce que** la couche de revêtement (22) est entièrement réalisée en PVC étalable.

6. Siège selon l'une quelconque des revendications précédentes, **caractérisé en ce que** ledit corps de contenance (25) comporte une extension orthogonale à la couche de recouvrement (35) et s'étend de la source (30) à la couche de revêtement (22) pour guider la lumière émise par la source (30) jusqu'à ladite couche de recouvrement (35).

7. Siège selon l'une quelconque des revendications précédentes, **caractérisé en ce que** ledit corps de contenance (25) est en forme de champignon et présente une zone élargie (33) disposée du côté opposé à la source lumineuse (30) selon une direction orthogonale à la couche de recouvrement (35).

8. Siège selon l'une quelconque des revendications précédentes, **caractérisé en ce qu'**il comprend un support (26) inséré à l'intérieur dudit corps de contenance, sur ce support (26) est appliqué un circuit électrique (29) comprenant à son tour ladite source lumineuse (30).

9. Siège selon la revendication 8, **caractérisé en ce que** ledit élément électroluminescent est du type LED polychromatique.

10. Siège selon la revendication 8 ou 9, **caractérisé en ce que** ledit support (26) est pourvu d'une pluralité de trous (26') dans lesquels est inséré le matériau transparent et souple définissant ledit corps de contenance (25).

11. Siège selon l'une quelconque des revendications 8 à 10, **caractérisé en ce que** ledit circuit électrique (29) est équipé d'un module sans fil (31), pour émettre/recevoir des impulsions et des commandes sans fil, étant configuré pour la gestion à distance de ladite source lumineuse (30).

12. Siège selon la revendication 11, **caractérisé en ce que** ledit circuit électrique (29) est fermé par un couvercle (28) en matériau transparent.

13. Siège selon la revendication 12, **caractérisé en ce que** ledit couvercle (28) est pourvu d'une lentille semi-sphérique (32), également transparente, dont le centre est placé sur un axe perpendiculaire à la base (29) et passant par le centre de l'élément électroluminescent (30) pour la propagation de la lumière à travers ledit corps (25).

14. Siège pour réaliser un symbole lumineux selon les revendications précédentes, **caractérisé en ce que** ledit corps de contenance (25) est constitué d'un matériau souple et transparent et a une forme prismatique ou cylindrique ou une autre forme tridimensionnelle comportant un côté de base sur lequel ladite source lumineuse (30) est montée.

15. Procédé de réalisation d'un symbole lumineux à l'intérieur d'un siège d'un véhicule, selon la revendication 1, **caractérisé en ce qu'**il comprend les étapes suivantes :
a) réaliser un rembourrage (21) dans lequel un siège (23) est obtenu ;
b) réaliser un corps de contenance (25) en matériau transparent et souple dans lequel est incluse la source lumineuse ; ledit corps de contenance (25) étant réalisé comme un corps solide et définissant une seule couche ;
c) positionner le corps de contenance (25) dans le siège (23) ;
d) revêtir le rembourrage avec une couche de revêtement (22) entièrement constituée d'un matériau qui permet le passage des rayons lumineux émis par la source (30) à travers le corps de contenance (25) ; ladite phase de revêtement étant réalisée de manière à ce que la couche de revêtement (22) soit entièrement constituée de tissu ou d'un autre matériau approprié qui permet le passage des rayons lumineux et pas seulement en correspondance du corps de contenance (25) d'où provient la lumière ;
e) appliquer une couche de recouvrement (35) étant opaque aux rayons lumineux à une surface intérieure dudit revêtement (22), en correspondance d'une zone de celuici adjacente audit corps de contenance (25), de manière à définir un dessin dudit symbole lumineux avec une alternance de zones étant transparentes aux rayons lumineux par rapport auxdites zones opaques.
